# EUROPEAN PATENT SPECIFICATION

(11) **EP 3 090 472 B1**
(45) Date of publication and mention of the grant of the patent: **08.05.2024**
(21) Application number: 14828113.2
(22) Date of filing: 30.12.2014
(51) Int. Cl.: H02B 1/056, H01R 13/15, H02B 1/20, H01H 71/02, H01H 71/08, H01R 9/26

(54) **ELECTRICAL CIRCUIT BREAKER ASSEMBLY**
LEISTUNGSSCHALTERANORDNUNG
ENSEMBLE DE DISJONCTEURS

(30) Priority: 03.01.2014 US 201461923416 P
(43) Date of publication of application: 09.11.2016
(73) Proprietor: Electronic Theatre Controls, Inc., Middleton, WI 53562-0979 (US)
(72) Inventor: BURKE, Kevin, Middleton, WI 53562-0979 (US); THURK, John, Middleton, WI 53562-0979 (US); UDELHOFEN, John, Middleton, WI 53562-0979 (US)
(74) Representative: Forresters IP LLP
(86) International application number: PCT/US2014/072660
(87) International publication number: WO 2015/103196

(56) References cited:
- EP-A2- 1 139 531
- DE-A1- 3 110 609
- GB-A- 2 312 797
- US-A- 4 446 503
- US-A- 5 375 036
- US-A- 6 086 388
- US-B1- 6 530 811
- US-B1- 7 553 175

## Description

### CROSS REFERENCE TO RELATED APPLICATIONS

This application claims priority to U.S. Provisional Patent Application No. 61/923416, filed January 3, 2014.

### BACKGROUND

The present invention relates to electrical circuit breakers and methods for using circuit breakers.

Circuit breakers are electrical switches that are commonly used to protect an electrical circuit from damage caused by too much current, such as can result from an overload or short circuit condition. Circuit breakers are typically designed to automatically trip open when an undesired condition is encountered, and they can also be reset to the closed position when the undesired condition is removed.

Some circuit breakers can be controlled (e.g., manually tripped or reset) remotely, while others must be controlled locally (e.g., physically at the breaker). For remotely-controllable breakers, solenoids are often used to facilitate remotely tripping or resetting the breaker.

The US7553175B1 discloses a power distribution system and electrical connect assembly. An electrical connector assembly is provided for electrically connecting an electrical apparatus, such as a circuit breaker, to an electrical bus member. The electrical connector assembly includes a contact stab extending outwardly from the electrical bus member. The contact stab includes first and second sides having first and second indentations, respectively, which are disposed opposite one another. A clip member mechanically couples and electrically connects the circuit breaker to the contact stab. The clip member includes a first leg and a second leg disposed opposite and distal from the first leg. The first leg engages the first indentation of the first side of the contact stab and the second leg engages the second indentation of the second side of the contact stab, thereby retaining the clip on the contact stab.US5375036 discloses a current transfer bus and assembly. A circuit breaker has a line terminal comprising a pair of vertically spaced resilient terminal strips which extend in the transverse horizontal direction out from the breaker's housing to free ends of the strips, and which strips have formed therein near those ends respective bends disposed opposite each other and vertically projecting away from each other to bound opposite sides of a circular cylindrical cavity defined between those strips. A horizontal rail for conducting current is aligned in its lengthwise direction normal to those strips, and the rail has a flange received in the cavity in electromechanical contact with the strips, and also, a web extending in the transverse horizontal direction from the front flange out beyond the terminal to a rear flange for the rail. The shape, size and mass of the rail promote reduction of the temperature generated at the line terminal by the inrush of current carried by the rail in the presence of a short circuit in the load served by the breaker.

GB2312797 discloses an electrical energy distribution board. An electrical distribution board comprises a main switch, a plurality of secondary switches, electrical conductors which connect the secondary switches to the main switch, and means for mounting the switches on the base of the board. To achieve quick and easy assembly of the board with the use of secondary switches of different shapes and sizes, a body of insulating material (partly omitted for clarity) is provided, fixed removably to the base the electrical conducts being incorporated in the body in the form of substantially rigid metal elements with ends projecting from the body for connection to the main switch and to the secondary switches.

EP1139531A2 discloses an electrical supply assembly. The disclosure is concerned with an electricity supply assembly of the kind described in European patent specification - B 0 472 409, comprising an elongate housing mounted adjacent to a mounting rail of the din-rail type, an elongate supply member, located in the housing, the housing being provided with a plurality of openings, and the supply member having a contact surface extending the longitudinal direction parallel to the length of the mounting rail. Each circuit breaker comprises a contact member, projecting from an underside of the circuit breaker, wherein when the circuit breaker is mounted on the mounting rail, the contact member passes through one of the openings into the housing, an into face-to0face engagement with the supply member. The disclosure includes four embodiments, in which this convenient construction can be utilised in the control of a multi-phase electricity supply.

US4446503 discloses an electrical panel board with main breaker hold down. A Z-shaped bracket is secured to a circuit breaker panel by a fastener to project forwardly along a plug-in main circuit breaker and overlie the forward surface of the main breaker to prevent removal of the main breaker without first removing the bracket. The bracket and its function are made plainly evident by placement and indicia.

US6086388 discloses an auxiliary switch system for use with removable circuit breaker. An auxiliary terminal connector adapted for use with a circuit breaker panel into which one or more pluggable circuit breakers are plugged comprises a support base which supports one or more electrically conducting bus connectors. Each bus connector corresponds to a pin from each set of signaling connector pins of the pluggable circuit breaker and is adapted to electrically connect together all these corresponding pins such that signals from them are conveniently bused together and can be accessed from a single or multiple positions on the auxiliary terminal connector. The bus connectors are tulip-shaped in cross section and are adapted to maintain good electrical contact with the signaling pins. They are made of resilient, electrically conducting material which provides a biasing component against the signaling pins when these are plugged in. Manufacturing tolerances and other deviations are accommodated by slits provided in portions of the bus connectors which permit some independence in the biasing of portions of the bus connectors against associated pin.

DE3110609A1 discloses a mechanical-electrical plug connection having at least one contact element pair (spring contact - blade contact), the spring contact (1) being provided with an expanding tab (4), which projects in the insertion direction, for deflection out of the contact plane during the insertion process until it latches in a depression (9) in the surface of the blade contact. The contact surfaces (5, 5'), which are coated with noble metal, of the spring contact (1) and blade contact (6) are arranged outside the sliding path (10) of the expanding tab (4) on the blade contact (1) and its projection (10') on the spring contact, in such a manner that they do not come into contact with one another until the expanding tab (4) has latched in the depression (9). In consequence, the contact surfaces are not subject to any mechanical stress or wear during the insertion process. Contact element pairs of such a design are used mainly in multipole plug connectors for metrology, control technology and regulation technology.

US6530811 discloses an assembly for mechanically mounting and providing electrical connections to overcurrent protection devices having first and second male power plugs includes a non-conductive main structural support member having a plurality of plug passageways formed therein and one or more load busbar modules mounted thereon and also including a plug passageway formed therein, to enable the male electrical plugs to mate with sockets disposed in a conductive line busbar member mounted on said support member and with a socket disposed in a load busbar member included in each load busbar module. Each load busbar module includes a non-conductive housing and a releasable cover within which is mounted the load busbar member. A printed circuit board substrate is preferably also mounted to said support member to provide a support surface for auxiliary signal clip connectors disposed on one side of the substrate. Additional passageways enable auxiliary contact terminals that are preferably also included on each overcurrent protection device to extend through the substrate. Clip connectors disposed on the substrate are used to make electrical contact to the auxiliary terminals. Each set of sockets and clips are shaped and dimensioned to mate with the power plugs and alarm contact terminals of a plug-in circuit breaker or fuse module.

### SUMMARY

The present invention is defined by claim 1 and provides among other things a breaker assembly comprising a breaker board having a bus bar including a first engagement feature (e.g., a recess) wherein the breaker board has a back surface with board connections that are positioned in a well and a breaker module having a line side connector including a second engagement feature (e.g., a protrusion) engaging the first engagement feature to provide inhibit separation of the breaker module from the breaker board wherein the breaker module has a bottom surface and a protruding platform that contains breaker connections engaging the board connections. The first and second engagement features can also provide a tactile and auditory indication (e.g., a snap) that the breaker module has fully seated into the breaker board. Preferably, the line side connector includes two resilient conductors spaced apart a distance less than a thickness of the bus bar. In one embodiment, the breaker board further includes a mounting rail spaced from the bus bar, and the breaker module further includes a pivot mount engaging (e.g., pivotally engaging) the mounting rail. The module mount can include a first alignment feature (e.g., an alignment recess), and the board mount can include a second alignment feature (e.g., an alignment web) engaging the first alignment feature.

In another aspect of the invention, the board connections are positioned between the mounting rail and the bus bar, the breaker connections are positioned between the pivot mount and the line side connector, and the board connections are engaged with the breaker connections. Preferably, the breaker connections are blind mate connections positioned along a back side of the breaker module.

In another aspect of the invention, the line side connector is adjacent a first end of the breaker module, the module mount is adjacent a second opposing end of the breaker module, and the breaker module further comprises a ledge positioned adjacent the first end (e.g., adjacent a front side of the breaker module). The ledge preferably defines an undercut that facilitates prying of the breaker module from the breaker board.

Other aspects of the invention will become apparent by consideration of the detailed description and accompanying drawings.

### BRIEF DESCRIPTION OF THE DRAWINGS

Fig. 1 is a perspective view of a circuit breaker assembly not falling within the scope of the claims.
Fig. 2 is an enlarged perspective view of the assembly of Fig. 1 showing a single breaker module mounted to the breaker board.
Fig. 3 is an enlarged view of Fig. 2.
Fig. 4 shows the breaker module of Fig. 2 exploded from the breaker board.
Fig. 5 shows the breaker module of Fig. 4 partially inserted into the breaker board.
Fig. 6 shows a different view of the assembly of Fig. 5.
Fig. 7 shows the assembly of Fig. 6 with the breaker module fully seated into the breaker board.
Fig. 8 is a perspective view of a mounting rail on the breaker board.
Fig. 9 is another view of the mounting rail of Fig. 8.

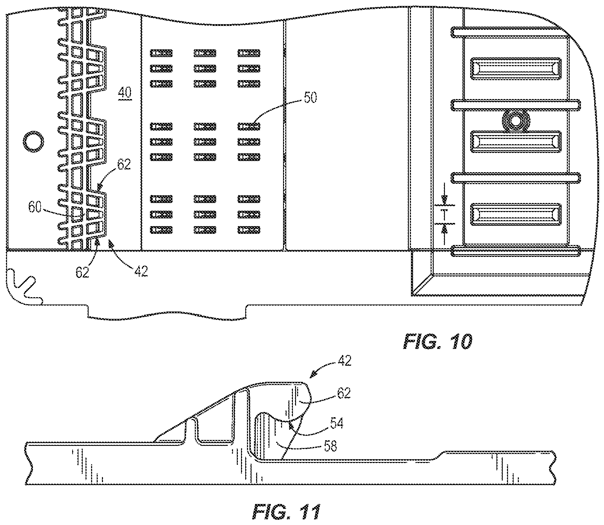

Fig. 10 is a top view of the mounting rail of Fig. 8.
Fig. 11 is a side view of the mounting rail of Fig. 8.
Fig. 12 is a perspective view of the breaker module with half of the housing removed.
Fig. 13 is another perspective view of the breaker module of Fig. 12.
Fig. 14 is another perspective view of the breaker module of Fig. 12.
Fig. 15 is a perspective view showing removal of a breaker module from the breaker board.
Fig. 16 is a partial perspective view of a breaker board according to an embodiment of the invention.
Fig. 17 is a different partial perspective view of the breaker board of Fig. 16.
Fig. 18 is a perspective view of a breaker module according to an embodiment of the invention designed to fit into the breaker board of Figs. 16-17.
Fig. 19 is a different perspective view of the breaker module of Fig. 17.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

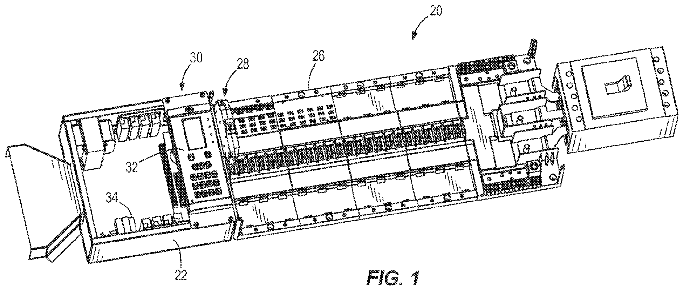

Fig. 1 is a perspective view of a circuit breaker assembly 20 not falling within the scope of the claims. The assembly 20 includes a housing 22, a breaker board 26, breaker modules 28, a controller 30 having a control panel 32, and control circuitry 34. The illustrated housing 22 is shown with several panels removed. Many of these parts can be provided with off-the-shelf parts, but the breaker board 26 and breaker modules 28 in this embodiment are specifically designed to achieve the benefits of the present invention.

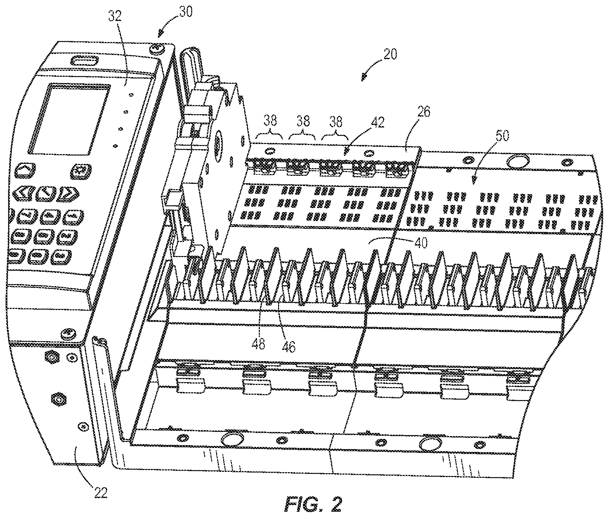

Referring to Figs. 1 and 2, the illustrated breaker board 26 includes forty-eight stations 38, including twenty-four stations along one side of the assembly and another twenty-four stations along the other side of the assembly. As such, it can be seen that each station 38 has a station 38 horizontally aligned with it to thereby create a pair of aligned stations. The stations 38 are divided into three different groups: left phase, center phase, and right phase, and each pair of horizontally aligned stations (i.e., directly across from each other, back-to-back) has the same phase. The groups of stations are arranged in an alternating pattern with the lowest pair of stations being right phase, the next pair of stations being center phase, the next pair of stations being left phase, and so on.

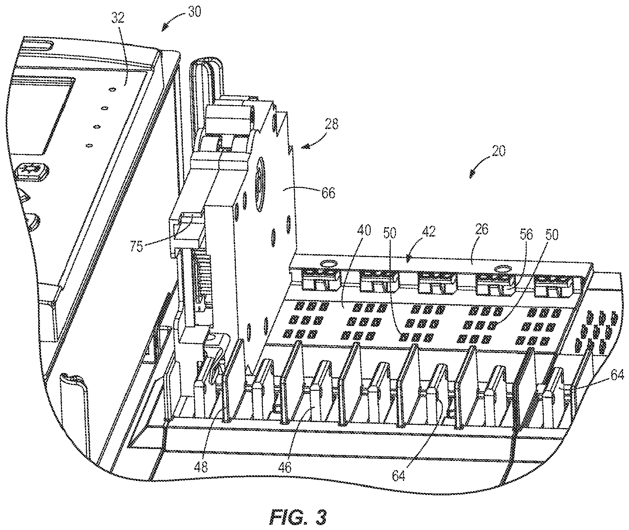

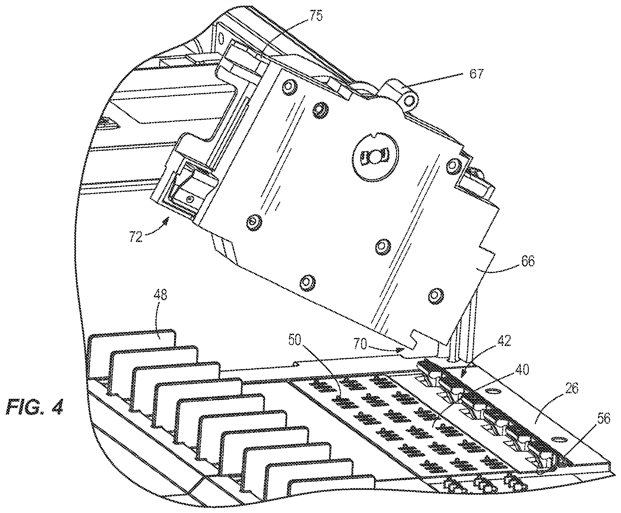

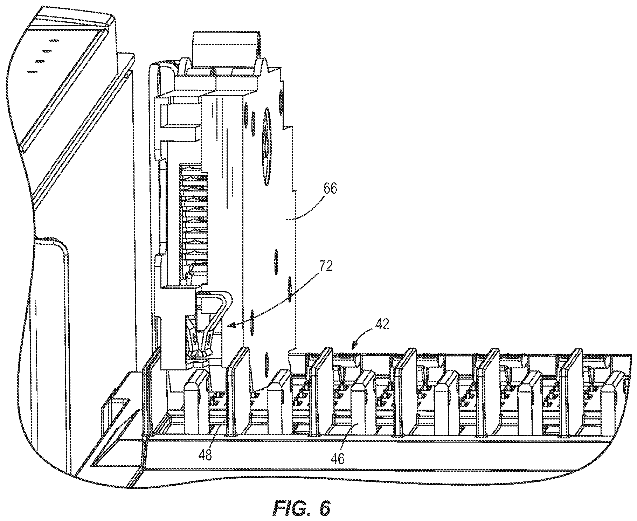

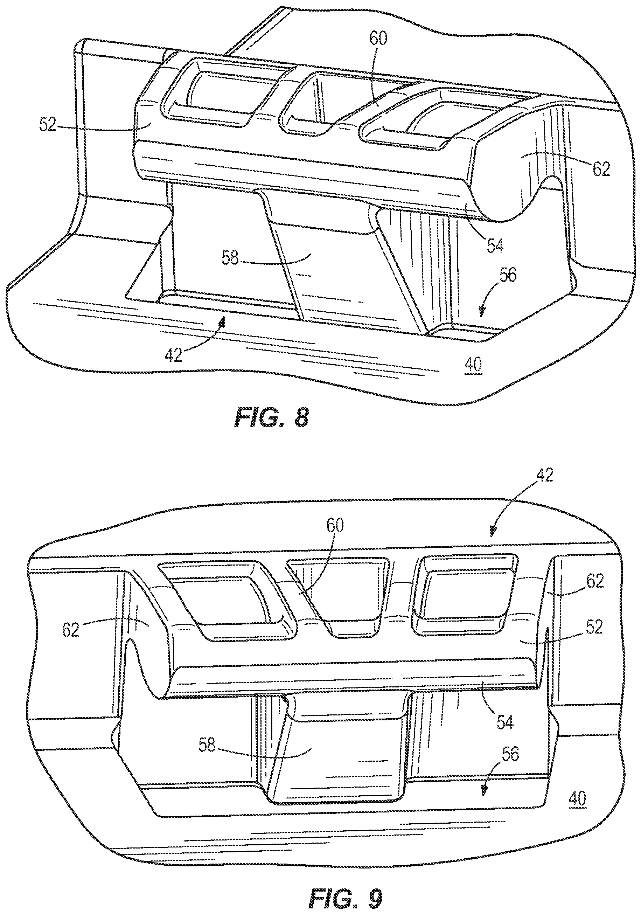

As shown in Figs. 3-7, each station 38 includes a back surface 40, a board mount in the form of a mounting rail 42, a bus bar 46, and an insulating wall 48. Each back surface 40 includes board connections 50 for providing electrical communication between the controller 30 and the breaker module 28. Referring to Figs. 8 and 9, each mounting rail 42 includes a rail member 52 having a cylindrically curved convex surface 54 that facilitates pivoting of the breaker module 28 as it is being mounted on the breaker board 26, as described below in more detail. The back surface 40 includes a recess 56 behind each mounting rail 42. Each mounting rail further includes an alignment web 58 extending between the rail member 52 and the recess 56 to facilitate alignment of the breaker module 28 in the station 38, as described below in more detail. The outer surface of each mounting rail 42 includes reinforcement flanges 60, and the sides 62 of each mounting rail 42 are tapered to facilitate insertion of the breaker module 28 into the station 38.

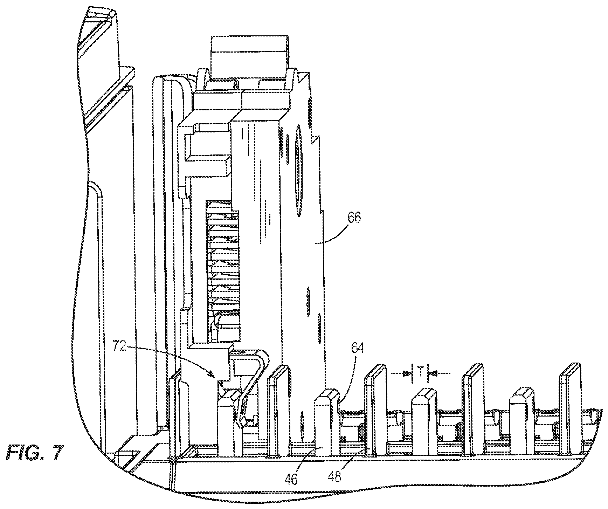

The bus bar 46 of each station 38 is integrally connected to the bus bar 46 of the horizontally aligned station 38 such that the pairs of stations are in a back-to-back orientation and share a common bus bar 46. Each bus bar 46 includes an engagement feature in the form of a hole 64 (see Figs. 3 and 7) that facilitates positive engagement of the corresponding breaker module 28, as described below in more detail.

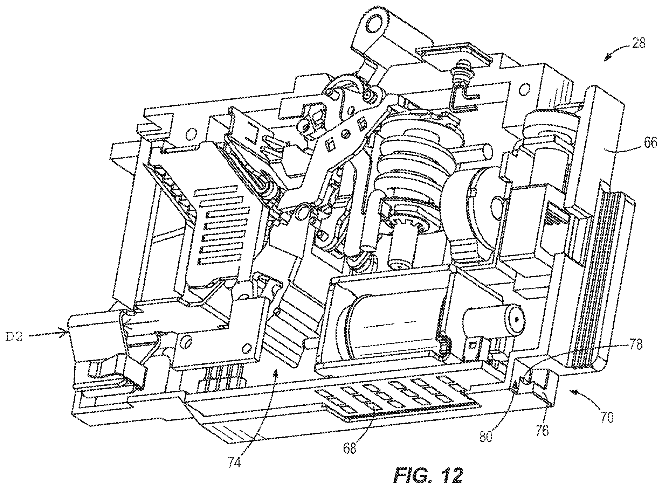

Each breaker module 28 includes a breaker housing 66, a reset lever 67 on a front side of the housing 66, an array of breaker connections 68 on a back side of the housing 66, a module mount in the form of a pivot mount 70 positioned adjacent the front side and a second end of the breaker housing 66, and a line side connector 72 positioned adjacent the back side and a first end of the breaker housing 66. In Figs. 2-7, part of the breaker housing 66 has been truncated in order to more clearly show the line side connector 72. In Figs. 12-14, half of the breaker housing 66 has been omitted. The breaker housing 66 contains the electrical components 74 of the breaker module 28. The breaker connections 68 are low-voltage connections that facilitate electrical communication between the controller 30 and the breaker module 28 when the breaker module 28 is mounted in the corresponding station 38. As shown in Figs. 12-14, the breaker connections 68 are positioned between the pivot mount 70 and the line side connector 72 along the back side of the breaker module 28. In this regard, the board connections 50 and breaker connections 68 are blind mate connections that are not accessible when the breaker module 28 is mounted to the breaker board 26.

The pivot mount 70 includes two pivot members 76, each having a cylindrically curved concave surface 78 (Fig. 12) adapted to engage the convex surface 54 of the corresponding rail member 52. The pivot members 76 are separated by an alignment recess 80 dimensioned to receive the alignment web 58 when the breaker module 28 is mounted to the breaker board 26 in order to insure proper alignment of the breaker module 28 relative to the station 38.

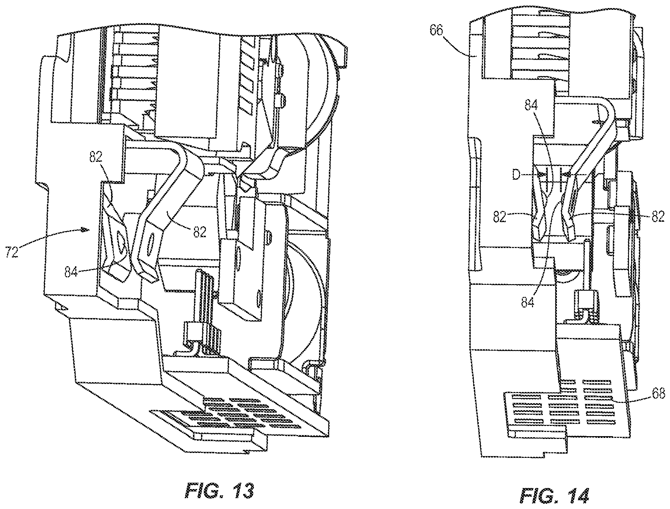

The line side connector 72 includes two resilient conductors 82 spaced apart from each other by a distance D (see Fig. 14) that is less than a thickness T (see Fig. 7) of the bus bar 46. Each resilient conductor 82 includes an engagement feature in the form of a raised boss 84 (see Figs. 13-14) adapted to fit into the hole 64 of the corresponding bus bar 46 in order to provide a tactile or audible indication that the breaker module 28 is fully seated into the corresponding station 38. The interaction between the boss 84 and the hole 64 can also hold the breaker module in place and prevent unwanted movement between the breaker module 28 and the bus bar 46.

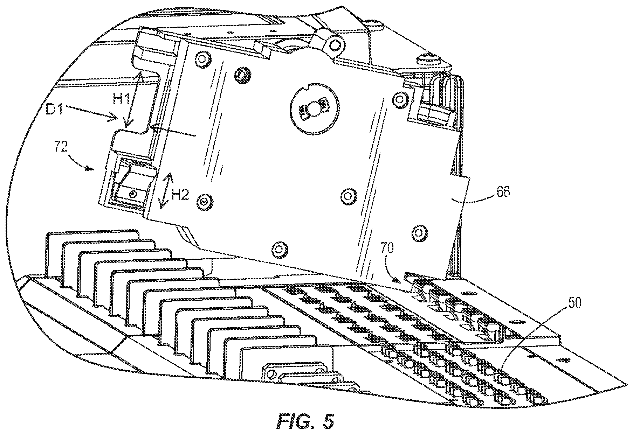

Immediately above (i.e., away from the line side connector 72, the breaker housing 66 includes a cut-out 77 that creates a vent channel for the venting of plasma. The cut-out 77 has a depth D1 that is approximately the same as a Depth D2 of the conductors 82 (Fig. 12). In addition, the cut-out 77 has a height H1 that is at least as large, and preferably larger than, the height H2 of the conductors 82 (see Fig. 5).

In operation, a breaker module 28 is inserted into a station 38 by first inserting the pivot members 76 under the rail member 52 with the alignment web 58 being received in the alignment recess 80. The breaker module 28 is then pivoted downward toward the back surface 40 of the station 38, thereby bringing the line side connector 72 into engagement with the corresponding bus bar 46. Further downward pivoting of the breaker module 28 results in the bus bar 46 being received between the two resilient conductors 82 until the raised bosses 84 snap into the hole 64 in the bus bar 46. Coupling the breaker module 28 to the station 38 in this manner will inherently result in the breaker connections 60 beings electrically coupled to the board connections 50 to facilitate communication between the controller 30 and the breaker module 28.

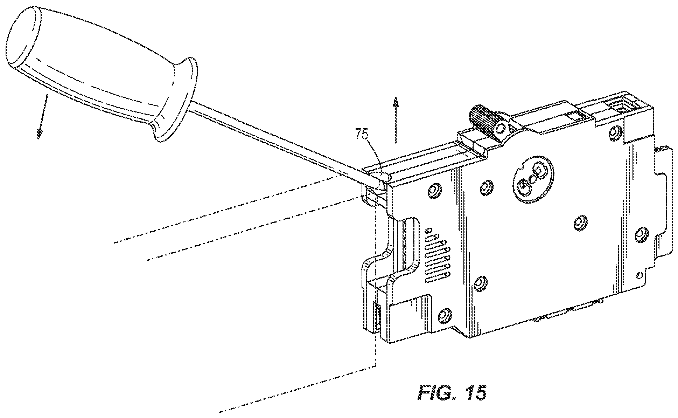

Referring to Fig. 15, the breaker module 28 includes a ledge 75 that facilitates disengaging the beaker module 28 from the breaker board 26. Specifically, the ledge 75 creates an undercut adapted to receive a pry bar, such as a flat head screwdriver, that can be leveraged off the adjacent breaker module in order to facilitate disengagement of the resilient conductors 82 from the corresponding bus bar 46.

Each breaker module 28 is a fully magnetic breaker with solenoid-actuated load switching and three positions - on, off, and tripped. Each breaker module 28 can be manually moved to the on or off positions at any time. The circuit breaker assembly 20 can also be controlled by the controller 30 that is remote from the breaker modules 28. The controller 30 receives information from a variety of sources and uses that information to determine the operating characteristics of the breaker assembly 20. For example, the controller 30 can receive commands (e.g., over a wired network or wirelessly over a wi-fi network) that dictate the operating parameters (e.g., whether to turn on, off, or re-set) of one or more breaker modules 28. The illustrated controller 30 is programmed to prevent the remote re-setting of a breaker module 28 if the breaker module 28 was tripped. In other words, when one of the illustrated breaker modules 28 is tripped, it can only be reset manually at the breaker module 28. In addition, the controller 30 allows the breaker to be turned on manually even if the breaker module 28 was turned off or tripped remotely (e.g., even if the controller dies).

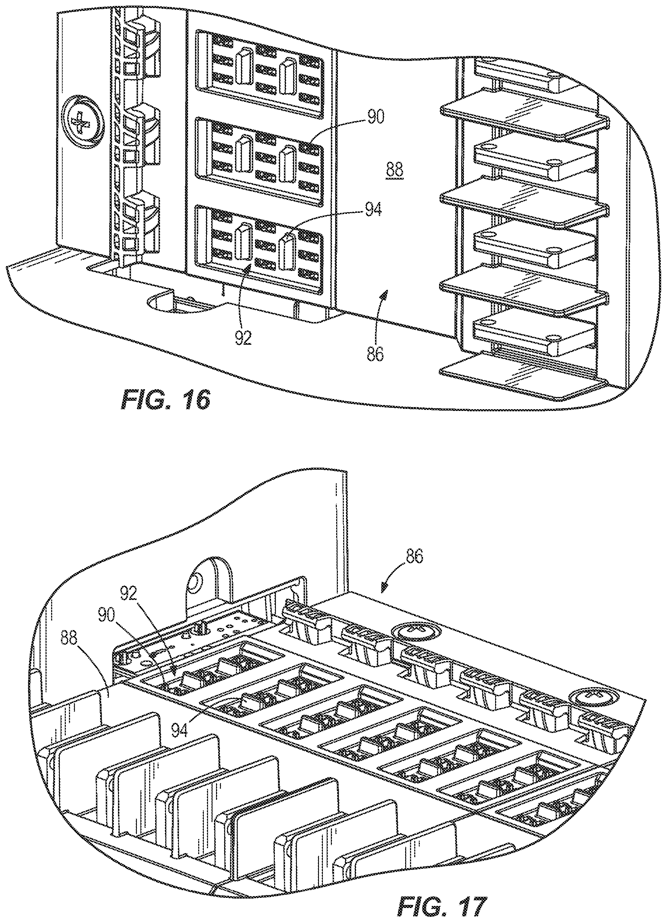

Figs. 16-17 illustrate a breaker board 86 according to the invention, the breaker board having a back surface 88 with board connections 90 that are positioned in a well 92 (i.e., offset from a plane defined by the back surface 88). Two raised stanchions 94 are positioned in the well 92.

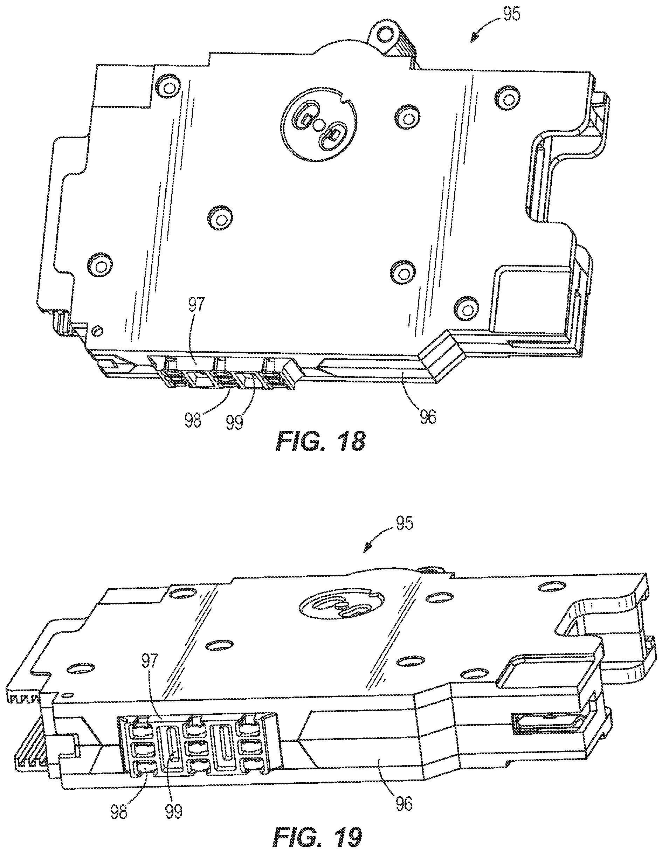

Figs. 18-19 illustrate a beaker module 95 according to the invention having a bottom surface 96 and a protruding platform 97 that contains breaker connections 98 adapted to engage the board connections 90 when the breaker module 95 is mounted to the breaker board 86 of Figs. 16-17. The platform 97 includes recesses 99 dimensioned to receive the stanchions 94 when the breaker module 95 is mounted to the breaker board 86.

Thus, the invention provides, among other things, a breaker assembly 20 having breaker modules 28 that can be easily snapped into place and that provides remote control capabilities while limiting remote reset when the breaker has tripped and allowing full manual control at the breaker module 28. Various features and advantages of the invention are set forth in the following claims.

## Claims

1. A breaker assembly comprising:
a breaker board (86) having:
a bus bar including a first engagement feature,
a board mount spaced from the bus bar, and
a back surface (88) with board connections (90) that are positioned in a well (92) positioned between the board mount and the bus bar; and
a breaker module (95) having:
a line side connector including a second engagement feature engaging the first engagement feature to inhibit separation of the breaker module (95) from the breaker board (86),
a module mount engaging the board mount, and
a bottom surface (96), and a platform (97) protruding from the bottom surface between the module mount and the line side connector and containing breaker connections (98) engaging the board connections (90),
wherein:
the board connections (90) are for providing electrical communication between a controller (30) of the breaker assembly and the breaker module (95); and
two raised stanchions (94) are positioned in the well (92), and the platform (97) includes recesses (99) dimensioned to receive the stanchions (94) when the breaker module (95) is mounted to the breaker board (86).

2. The breaker assembly of claim 1, wherein the first engagement feature comprises a recess in the bus bar.

3. The breaker assembly of claim 1, wherein the line side connector includes two resilient conductors spaced apart a distance less than a thickness of the bus bar.

4. The breaker assembly of claim 1, wherein the board mount is a mounting rail, and the module mount is a pivot mount pivotally engaging the mounting rail.

5. The breaker assembly of claim 4, wherein the pivot mount includes a first alignment feature and the mounting rail includes a second alignment feature engaging the first alignment feature.

6. The breaker assembly of claim 5, wherein the first alignment feature comprises an alignment recess and the second alignment feature comprises an alignment web positioned in the alignment recess.

7. The breaker assembly of claim 4, wherein the breaker connections (98) are blind mate connections positioned along a bottom side of the breaker module (95).

8. The breaker assembly of claim 4, wherein the line side connector is adjacent a first end of the breaker module (95) and the pivot mount is adjacent a second opposing end of the breaker module (95), and wherein the breaker module (95) further comprises a ledge positioned adjacent the first end.

9. The breaker assembly of claim 8, wherein the ledge is adjacent a front side of the breaker module (95).

10. The breaker assembly of claim 8, wherein the ledge defines an undercut that facilitates prying of the breaker module (95) from the breaker board (86).

## Patentansprüche

1. Leistungsschalteranordnung, umfassend:
Eine Leistungsschalterplatte (86), die aufweist:
Eine Stromschiene mit einer ersten Kupplungsfunktion,
eine Plattenhalterung, die von der Stromschiene beabstandet ist, und
eine Rückseite (88) mit Plattenverbindungen (90), die in einer Vertiefung (92) positioniert sind, die zwischen der Plattenhalterung und der Stromschiene positioniert ist; und
ein Leistungsschaltermodul (95), das aufweist:
Einen leitungsseitigen Verbinder, der eine zweite Kupplungsfunktion einschließt, welche die erste Kupplungsfunktion in Eingriff bringt, um Trennung des Leistungsschaltermoduls (95) von der Leistungsschalterplatte (86) zu hemmen,
eine Modulhalterung, welche die Plattenhalterung kuppelt, und
eine Unterseite (96), und eine Plattform (97), die aus der Unterseite zwischen der Modulhalterung und dem leitungsseitigen Verbinder hervorsteht und Leistungsschalterverbindungen (98) enthält, welche die Plattenverbindungen (90) in Eingriff bringen,
wobei:
Die Plattenverbindungen (90) der Bereitstellung elektrischer Kommunikation zwischen einem Controller (30) der Leistungsschalteranordnung und dem Leistungsschaltermodulmodul (95) dienen; und
zwei erhöhte Stützen (94) in der Vertiefung (92) positioniert sind, und die Plattform (97) Aussparungen (99) einschließt, die bemessen sind, die Stützen (94) aufzunehmen, wenn das Leistungsschaltermodul (95) an die Leistungsschalterplatte (86) montiert wird.

2. Leistungsschalteranordnung nach Anspruch 1, wobei die erste Kupplungsfunktion eine Aussparung in der Stromschiene umfasst.

3. Leistungsschalteranordnung nach Anspruch 1, wobei der leitungsseitige Verbinder zwei elastische Leiter einschließt, die weniger als die Dicke der Stromschiene beabstandet sind.

4. Leistungsschalteranordnung nach Anspruch 1, wobei die Plattenhalterung eine Montageschiene ist, und die Modulhalterung eine Gelenkhalterung ist, die drehbar an der Montageschiene angreift.

5. Leistungsschalteranordnung nach Anspruch 4, wobei die Gelenkhalterung eine erste Ausrichtungsfunktion einschließt und die Montageschiene eine zweite Ausrichtungsfunktion einschließt, welche die erste Ausrichtungsfunktion in Eingriff bringt.

6. Leistungsschalteranordnung nach Anspruch 5, wobei die erste Ausrichtungsfunktion eine Ausrichtungsaussparung umfasst und die zweite Ausrichtungsfunktion ein Ausrichtungsnetz umfasst, das in der Ausrichtungsaussparung positioniert ist.

7. Leistungsschalteranordnung nach Anspruch 4, wobei die Verbindungen (98) des Leistungsschalters Blindsteckverbindungen sind, die entlang einer Unterseite des Leistungsschaltermoduls (95) positioniert sind.

8. Leistungsschalteranordnung nach Anspruch 4, wobei der leitungsseitige Verbinder an ein erstes Ende des Leistungsschaltermoduls (95) angrenzt und die Gelenkhalterung an ein zweites entgegengesetztes Ende des Leistungsschaltermoduls (95) angrenzt, und wobei das Leistungsschaltermodul (95) ferner einen Vorsprung umfasst, der angrenzend an das erste Ende positioniert ist.

9. Leistungsschalteranordnung nach Anspruch 8, wobei der Vorsprung an eine Vorderseite des Leistungsschaltermoduls (95) angrenzt.

10. Leistungsschalteranordnung nach Anspruch 8, wobei der Vorsprung einen Unterschnitt definiert, der das Abhebeln des Leistungsschaltermoduls (95) von der Leistungsschalterplatte (86) erleichtert.

## Revendications

1. Ensemble disjoncteur, comprenant :
une carte de disjoncteur (86) comportant :
une barre omnibus comprenant une première caractéristique d'engagement,
un support de carte espacé de la barre omnibus, et
une surface arrière (88) avec des connexions de carte (90) qui sont positionnées dans un puits (92) positionné entre le support de carte et la barre omnibus ; et
un module disjoncteur (95) comportant :
un connecteur côté ligne comprenant une seconde caractéristique d'engagement s'engageant dans la première caractéristique d'engagement pour empêcher la séparation du module disjoncteur (95) de la carte de disjoncteur (86),
un support de module s'engageant dans le support de carte, et
une surface inférieure (96) et une plateforme (97) faisant saillie par rapport à la surface inférieure entre le support de module et le connecteur côté ligne et contenant des connexions de disjoncteur (98) s'engageant dans les connexions de carte (90),
les connexions de carte (90) servant à assurer une communication électrique entre un dispositif de commande (30) de l'ensemble disjoncteur et le module disjoncteur (95) ; et
deux montants surélevés (94) étant positionnés dans le puits (92), et la plateforme (97) comprenant des évidements (99) dimensionnés pour recevoir les montants (94) lorsque le module disjoncteur (95) est monté sur la carte de disjoncteur (86).

2. Ensemble disjoncteur selon la revendication 1, dans lequel la première caractéristique d'engagement comprend un évidement dans la barre omnibus.

3. Ensemble disjoncteur selon la revendication 1, dans lequel le connecteur côté ligne comprend deux conducteurs élastiques espacés d'une distance inférieure à une épaisseur de la barre omnibus.

4. Ensemble disjoncteur selon la revendication 1, dans lequel le support de carte est un rail de montage, et le support de module est un support pivotant s'engageant pivotant dans le rail de montage.

5. Ensemble disjoncteur selon la revendication 4, dans lequel le support pivotant comprend une première caractéristique d'alignement et le rail de montage comprend une seconde caractéristique d'alignement s'engageant dans la première caractéristique d'alignement.

6. Ensemble disjoncteur selon la revendication 5, dans lequel la première caractéristique d'alignement comprend un évidement d'alignement et la seconde caractéristique d'alignement comprend une bande d'alignement positionnée dans l'évidement d'alignement.

7. Ensemble disjoncteur selon la revendication 4, dans lequel les connexions de disjoncteur (98) sont des connexions aveugles positionnées le long d'un côté inférieur du module disjoncteur (95).

8. Ensemble disjoncteur selon la revendication 4, dans lequel le connecteur côté ligne est adjacent à une première extrémité du module disjoncteur (95) et le support pivotant est adjacent à une seconde extrémité opposée du module disjoncteur (95), et dans lequel le module disjoncteur (95) comprend en outre un rebord positionné adjacent à la première extrémité.

9. Ensemble disjoncteur selon la revendication 8, dans lequel le rebord est adjacent à un côté avant du module disjoncteur (95).

10. Ensemble disjoncteur selon la revendication 8, dans lequel le rebord définit une contre-dépouille qui facilite l'extraction du module disjoncteur (95) de la carte de disjoncteur (86).
